# EUROPÄISCHE PATENTANMELDUNG

(11) **EP 4 006 354 A1**
(43) Veröffentlichungstag der Anmeldung: **01.06.2022**
(21) Anmeldenummer: 21209356.1
(22) Anmeldetag: 19.11.2021
(51) Int. Cl.: F04D 29/12, F16J 15/00, F16J 15/18, F16J 15/3272, F16J 15/34, F16J 15/54

(54) **DICHTUNG UND ROTIERENDES SYSTEM**

(30) Priorität: 30.11.2020 DE 102020215079
(71) Anmelder: STASSKOL GmbH, 39418 Stassfurt (DE)
(72) Erfinder: Kuse, Felix, 39124 Magdeburg (DE); Kranert, Dennis, 06449 Aschersleben (DE)
(74) Vertreter: WSL Patentanwälte Partnerschaft mbB

(57) **Zusammenfassung**

Die vorliegende Erfindung betrifft eine Dichtung (10) für ein rotierendes System (100) mit zwei Dichteinheiten (20a, 20b), die entlang einer Hauptachse H hintereinander angeordnet sind, wobei die Dichteinheiten (20a, 20b) jeweils eine Durchgangsbohrung (22) für eine Welle (102) aufweisen und in Umfangsrichtung formschlüssig miteinander in Eingriff stehen und wobei zwischen den Dichteinheiten (20a, 20b) mindestens ein axiales Druckfederelement (12) angeordnet ist.

## Beschreibung

Die vorliegende Erfindung betrifft eine Dichtung für ein rotierendes System sowie ein rotierendes System mit zumindest einer Dichtung.

Unter einem rotierenden System wird eine Baugruppe verstanden, bei der mindestens ein Bauteil gegenüber einem anderen, stillstehenden Bauteil um eine Rotationsachse rotiert. Das rotierende Bauteil ist oftmals eine Welle.

Rotierende Systeme werden abgedichtet, um zu verhindern, dass Medien unkontrolliert an den Grenzen zwischen rotierendem und stillstehendem Bauteil austreten. Hierbei kommen Dichtungen zum Einsatz. Dichtungen können entweder in Form einer Einzeldichtung oder als Dichtungspackungen vorliegen. Bei einer Dichtungspackung handelt es sich um mehrere in axialer Richtung hintereinander angeordnete Einzeldichtungen (auch Packungsringe genannt).

Aus der US 7,040,627 B1 und der US 7,178,806 B1 sind zwei Dichtungen für rotierende Systeme bekannt.

Die US 6,305,693 B1 offenbart eine Dichtung für ein rotierendes System mit einem Dichtring, der auf einer Welle angeordnet und in axialer Richtung von Druckfedern gegen eine Dichtfläche gedrückt wird.

Weitere Dichtungen sind aus US 3,402,937, DE 699 736 C und CN 105971924 A bekannt.

Die aus dem Stand der Technik bekannten Lösungen sind insbesondere hinsichtlich ihrer langfristigen Dichtwirkung unbefriedigend. Es war daher Aufgabe der Erfindung, die Dichtwirkung von Dichtungen für rotierende Systeme zu verbessern.

Die Lösung dieser Aufgabe ist eine Dichtung für ein rotierendes System nach Anspruch 1.

Die Dichtung für ein rotierendes System umfasst zwei Dichteinheiten, die entlang einer Hauptachse H hintereinander angeordnet sind, wobei die Dichteinheiten jeweils eine Durchgangsbohrung für eine Welle aufweisen und in Umfangsrichtung formschlüssig miteinander in Eingriff stehen und wobei zwischen den Dichteinheiten mindestens ein axiales Druckfederelement angeordnet ist. Das axiale Druckfederelement muss kein separates Bauteil sein, sondern kann auch mit einer oder beiden Dichteinheiten integral verbunden sein. Das axiale Druckfederelement bewirkt, dass die beiden Dichteinheiten in entgegengesetzte Richtungen auseinander gedrückt werden. Das Druckfederelement muss daher auch bei einer integralen Ausführung so angeordnet sein, dass es die beiden Dichteinheiten in axialer Richtung auseinander drückt.

Bei bestimmungsgemäßem Gebrauch wird die Dichtung derart auf einer Welle eines rotierenden Systems angeordnet, dass die Welle durch die Durchgangsbohrungen verläuft. Die Dichtung ist kraftschlüssig mit der Welle verbunden und rotiert mit der Welle. In axialer Richtung liegt die Dichtung an einer (statischen) Fläche an, zu der sich die Welle relativ dreht. Die Fläche muss nicht global statisch sein, sondern lediglich relativ zu der Welle. Die Dichtung dichtet auf diese Weise in axialer Richtung dynamisch an der statischen Fläche als auch in Radialrichtung statisch zur Welle ab. Es hat sich gezeigt, dass die erfindungsgemäße Dichtung hinsichtlich ihrer Abdichtung den bisher bekannten Dichtungen überlegen ist. Die formschlüssige Verbindung zwischen den Dichteinheiten verhindert eine Torsion der Dichtung. Die Dichtheit ist auch bei radialer Bewegung der Welle hoch. Durch die Druckfederelemente erfolgt zudem ein axiales Nachstellen bei Verschleiß, wodurch die Dichtheit auch über einen langen Zeitraum gegeben ist.

Die Anforderungen an eine statische Abdichtung unterscheiden sich von jenen einer dynamischen Abdichtung. Vorzugsweise weist zumindest eine der Dichteinheiten einen ersten Dichtring und einen zweiten Dichtring auf, wobei die Dichtringe einer Dichteinheit axial benachbart angeordnet sind. Der erste Dichtring bewirkt dann die statische Abdichtung und der zweite Dichtring die dynamische Abdichtung. Dadurch können beide Dichtringe für die jeweilige Anwendung optimiert werden. So ist der erste Dichtring bevorzugt reibungsreich und der zweite Dichtring bevorzugt reibungsarm. Der erste Dichtring fixiert dann die Dichtung an der Welle und der zweite Dichtring kann sich relativ zu der statischen Fläche drehen ohne dass große Reibungskräfte der Bewegung entgegenwirken. Besonders bevorzugt besteht der erste Dichtring aus einem Elastomer. Dadurch gleicht der erste Dichtring radialen und axialen Versatz in der Dichtung aus. Der zweite Dichtring besteht bevorzugt aus PTFE oder einem PTFE-Compound.

Die Dichtringe weisen bevorzugt jeweils eine Durchgangsbohrung auf, die gemeinsam die Durchgangsbohrung für die Welle bilden.

Die Dichtringe einer Dichteinheit stehen bevorzugt in Umfangsrichtung formschlüssig miteinander in Eingriff. Dadurch kann der zweite Dichtring von dem ersten relativ zu der Welle fixiert werden. Der zweite Dichtring muss nicht mit der Welle unmittelbar in Kontakt stehen. Bevorzugt gibt es aber einen Spalt zwischen der Welle und dem zweiten Dichtring, um einen Winkelversatz zwischen der Welle und dem zweiten Dichtring zuzulassen.

Insbesondere weist der zweite Dichtring bevorzugt in axialer Richtung eine Vertiefung und der erste Dichtring in axialer Richtung einen zu der Vertiefung komplementären Vorsprung auf, wobei die Vertiefung und der Vorsprung die Dichtringe formschlüssig miteinander verbinden. Bei der Montage der Dichtung müssen die Dichtringe dann nur hintereinander auf die Welle geschoben werden, wodurch der Vorsprung in die Vertiefung eindringt und die Dichtringe formschlüssig miteinander verbunden sind. Die Vertiefung und der Vorsprung sind bevorzugt zentral angeordnet und besonders bevorzugt rotationssymmetrisch um die Hauptachse H.

Die Vertiefung und der Vorsprung weisen bevorzugt jeweils im Querschnitt die Form eines Reuleaux-Dreiecks auf, besonders bevorzugt mit abgerundeten Ecken. Die Ausbildung der Elemente als Reuleaux-Dreieck führt zu einer guten Kraftübertragung. Die Abrundungen der Ecken bewirken eine Minimierung der Kerbwirkung und gleichen eventuelle Fertigungstoleranzen des ersten Dichtrings aus, wodurch seine Montage erleichtert wird.

Zur weiteren Verbesserung der Dichtleistung sind die Dichteinheiten bevorzugt baugleich, aber gespiegelt angeordnet. Die Dichteinheiten können zusätzlich zu der Spiegelung zueinander verdreht sein. Die Spiegelung erfolgt an einer Ebene, die senkrecht zu der Hauptachse H verläuft. Die gespiegelte Anordnung ermöglicht die Anordnung der Dichtung zwischen zwei statischen Flächen, wobei die zweiten Dichtringe jeweils an einer der Flächen anliegen und dort abdichten.

Der erste Dichtring weist bevorzugt auf einer axialen Endfläche mindestens eine Vertiefung und eine in Umfangsrichtung dahinterliegende, insbesondere unmittelbar dahinterliegende, Erhöhung auf. Die Anzahl n der Vertiefungen und Erhöhungen und ihre Anordnung in Umfangsrichtung werden bevorzugt derart gewählt, dass jeder Vertiefung eine in Umfangsrichtung um 180°/n versetzter Erhöhung zuordenbar ist. Werden zwei baugleiche Dichteinheiten mit Erhöhungen und Vertiefungen gespiegelt angeordnet, so sind ihre axialen Endflächen derart einander zugewandt dass die Erhöhungen der ersten Dichtringe jeweils in der Vertiefung des anderen ersten Dichtrings liegen. Eine gespiegelte Anordnung umfasst auch solche Anordnungen, bei denen die Dichteinheiten zusätzlich relativ zueinander um die Hauptachse H verdreht werden, sodass die Erhöhungen und Vertiefungen der ersten Dichtringe ineinander greifen. Relativbewegungen zwischen den Dichteinheiten in Umfangsrichtung werden auf diese Weise verhindert, da die Flanken der Vertiefungen/Erhöhungen aneinander anliegen. Eine Torsion der Dichtung wird dadurch verhindert. Besonders bevorzugt sind pro erstem Dichtring mehrere Vertiefungen und Erhöhungen vorgesehen, insbesondere je zwei, die in Umfangsrichtung abwechselnd hintereinander angeordnet sind.

Bei den Druckfederelementen handelt es sich bevorzugt um Spiralfedern. Der erste Dichtring weist bevorzugt mindestens eine axiale Sackbohrung auf, wobei das axiale Druckfederelement in der axialen Sackbohrung angeordnet ist. Die Sackbohrungen führen die Druckfederelemente, insbesondere wenn es sich um Spiralfedern handelt, und ermöglichen eine definierte Positionierung der Druckfederelemente an dem ersten Dichtring. Bevorzugt sind mehrere Druckfederelemente vorgesehen, insbesondere vier Druckfederelemente, und ferner bevorzugt ist für jedes Druckfederelement eine eigene Sackbohrung vorgesehen. Werden zwei gleichartige Dichteinheiten gespiegelt angeordnet, so ist jedes Druckfederelement in einer Sackbohrung des ersten Dichtrings der einen Dichteinheit und zusätzlich in einer Sackbohrung des ersten Dichtrings der anderen Dichteinheit angeordnet und wird von beiden Sackbohrungen geführt.

Der erste Dichtring ist bevorzugt einteilig. Eine einteilige Herstellung ist kostengünstig und vereinfacht die Montage. Der erste Dichtring ist aber bevorzugt in Umfangsrichtung unterbrochen und weist zwei Enden auf, wobei an den Enden jeweils ein Verbindungsmittel zum gemeinsamen Schließen des Dichtrings in Umfangsrichtung vorgesehen ist. Auf diese Weise wird die Montage des ersten Dichtrings auf der Welle vereinfacht, da der erste Dichtring auch aus einer radialen Richtung kommend um die Welle gestülpt werden kann. Dies gilt insbesondere dann, wenn der erste Dichtring aus einem Elastomer gefertigt ist. Die Verbindungsmittel greifen bevorzugt in Umfangsrichtung formschlüssig ineinander, insbesondere in Form einer Puzzleverbindung, wodurch ein sicherer Halt der Dichtung auf der Welle gewährleistet wird.

Der zweite Dichtring ist bevorzugt in Umfangsrichtung in mindestens zwei miteinander verbindbare Segmente unterteilt, besonders bevorzugt in zwei Segmente. Insbesondere wenn der zweite Dichtring aus einem verschleißfesten Kunststoff (z. B. einem PTFE-Compound) gefertigt ist, lässt sich der zweite Dichtring aufgrund seiner Steifigkeit nicht wie der erste Dichtring aus radialer Richtung auf der Welle montieren. Die Unterteilung in mehrere Segmente hingegen ermöglicht eine derartige Montage. Benachbarte Segmente sind bevorzugt formschlüssig, insbesondere mittels einer Puzzleverbindung, miteinander verbindbar.

Das erfindungsgemäße rotierende System umfasst eine um eine Hauptachse H rotierenden Welle, mindestens eine zu der Welle statische Fläche und eine auf der Welle angeordnete und in Kontakt zu der Fläche stehende Dichtung nach der obigen Beschreibung. Die Dichtung ist derart auf der Welle angeordnet, dass die Welle durch die Durchgangsbohrungen der Dichtung verläuft. Die Dichtung ist kraftschlüssig mit der Welle verbunden und rotiert mit der Welle. In axialer Richtung liegt die Dichtung an einer (statischen) Fläche an, zu der sich die Welle relativ dreht. Die Fläche muss nicht global statisch sein, sondern lediglich relativ zu der Welle. Die Dichtung dichtet auf diese Weise in axialer Richtung dynamisch an der statischen Fläche als auch in Radialrichtung statisch zur Welle ab. Es hat sich gezeigt, dass die erfindungsgemäße hinsichtlich ihrer Abdichtung den bisher bekannten Dichtungen überlegen ist. Die formschlüssige Verbindung zwischen den Dichteinheiten verhindert eine Torsion der Dichtung.

Die Dichtheit ist auch bei radialer Bewegung der Welle hoch. Durch die Druckfederelemente erfolgt zudem ein axiales Nachstellen bei Verschleiß, wodurch die Dichtheit auch über einen langen Zeitraum gegeben ist. Die statische Fläche verläuft bevorzugt senkrecht zur Hauptachse H.

Bevorzugt umfasst das rotierende System zwei statische Flächen, wobei jede Fläche mit genau einer der Dichteinheiten in Kontakt steht. Die Dichtung ist dann zwischen den Flächen angeordnet. Besonders bevorzugt ist die Dichtung in einem Gehäuse angeordnet, wobei das Gehäuse zwei statische Flächen aufweist, mit denen die Dichtung in Kontakt steht.

Das Gehäuse weist bevorzugt zumindest eine Gaszuführöffnung auf. Durch die Gaszuführöffnung wird bei bestimmungsgemäßem Gebrauch ein Spül- oder Sperrgas unter Druck eingebracht. Der Gasdruck verstärkt die Dichtwirkung der zweiten Dichtringe an den statischen Flächen, unterstützt das Nachstellverhalten der ersten Dichtringe und trägt somit zusätzlich dazu bei, dass das abzudichtende Medium nicht austritt. Der Gasdruck beträgt bevorzugt 0,1 bis 0,5 bar über dem Umgebungsdruck.

Das rotierende System kommt bevorzugt bei langsam rotierenden Anwendungen zum Einsatz, beispielsweise bei Mischern für Pulver, Stäube und Lebensmittel sowie bei Rührwerken. Unter langsam rotierenden Anwendungen werden insbesondere solche mit Gleitgeschwindigkeiten bis 1,5 m/s verstanden.

Die Erfindung wird nachfolgend anhand der Zeichnungen beispielhaft dargestellt und erläutert. Es zeigt:
- Figur 1a: einen Teilschnitt eines rotierenden Systems;
- Figur 1b: einen weiteren Teilschnitt des rotierenden Systems gemäß Figur 1a;
- Figur 2a: eine erste perspektivische Darstellung eines ersten Dichtrings des rotierenden Systems gemäß Figur 1a;
- Figur 2b: eine zweite perspektivische Darstellung eines ersten Dichtrings des rotierenden Systems gemäß Figur 1a;
- Figur 2c: die Gesamtheit zweier ersten Dichtringe des rotierenden Systems gemäß Figur 1a;
- Figur 3a: eine perspektivische Darstellung eines zweiten Dichtrings des rotierenden Systems gemäß Figur 1a;
- Figur 3b: eine Draufsicht eines zweiten Dichtrings des rotierenden Systems gemäß Figur 1a;

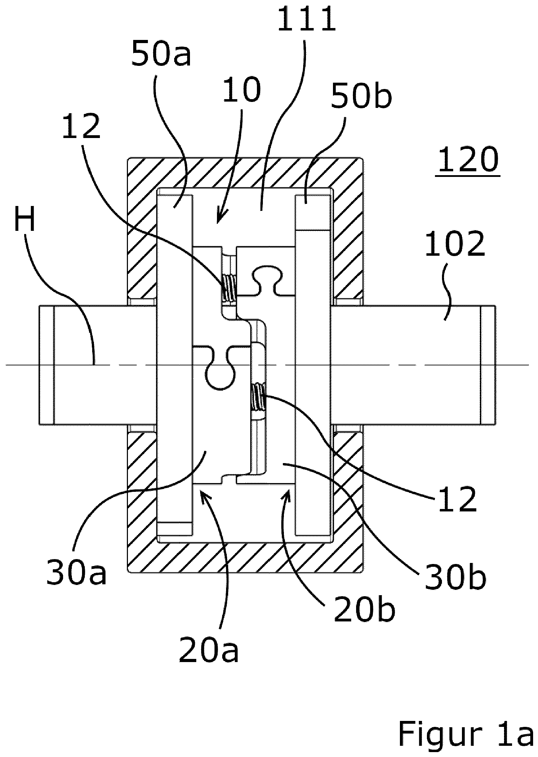

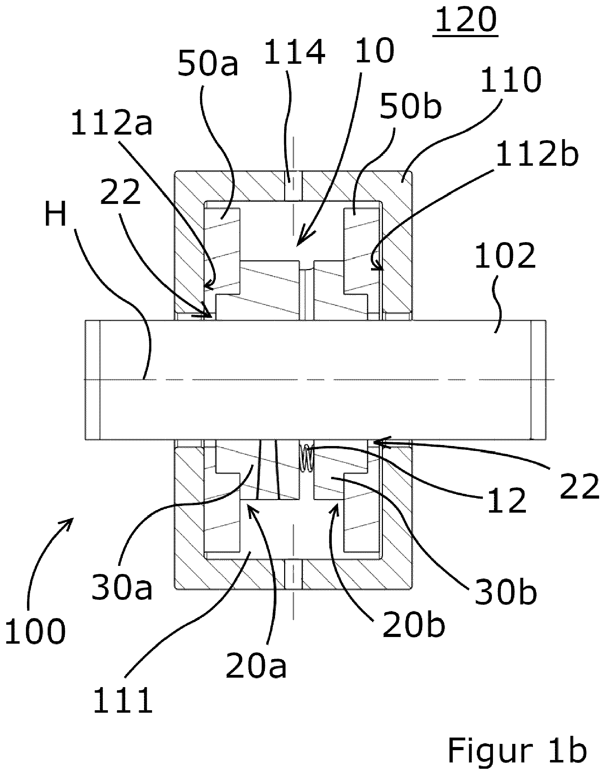

Das in den Figuren 1a, 1b dargestellte rotierende System 100 umfasst eine um eine Hauptachse H rotierende Welle 102 und eine auf der Welle 102 angeordnete Dichtung 10 (siehe Figur 1a). Die Dichtung 10 ist in einem Gehäuse 110 angeordnet. Das Gehäuse 110 rotiert bei bestimmungsgemäßem Gebrauch nicht mit der Welle 102. Vielmehr ist das Gehäuse 110 statisch und umfasst zwei statische Flächen 112a, 112b, die jeweils senkrecht zu der Hauptachse H verlaufen (siehe Figur 1b). Die Dichtung 10 ist zwischen den Flächen 112a, 112b angeordnet und steht in axialer Richtung mit beiden statischen Flächen 112a, 112b in Kontakt.

Die Dichtung 10 umfasst zwei Dichteinheiten 20a, 20b, die entlang der Hauptachse H hintereinander angeordnet sind. Jede Dichteinheit 20a, 20b umfasst jeweils eine Durchgangsbohrung 22, wobei die Welle 102 durch die Durchgangsbohrungen 22 verläuft. Die Dichteinheiten 20a, 20b sind baugleich, aber gespiegelt und zueinander verdreht auf der Welle 102 angeordnet.

Die Dichteinheiten 20a, 20b umfassen jeweils einen ersten Dichtring 30a, 30b und einen zweiten Dichtring 50a, 50b.

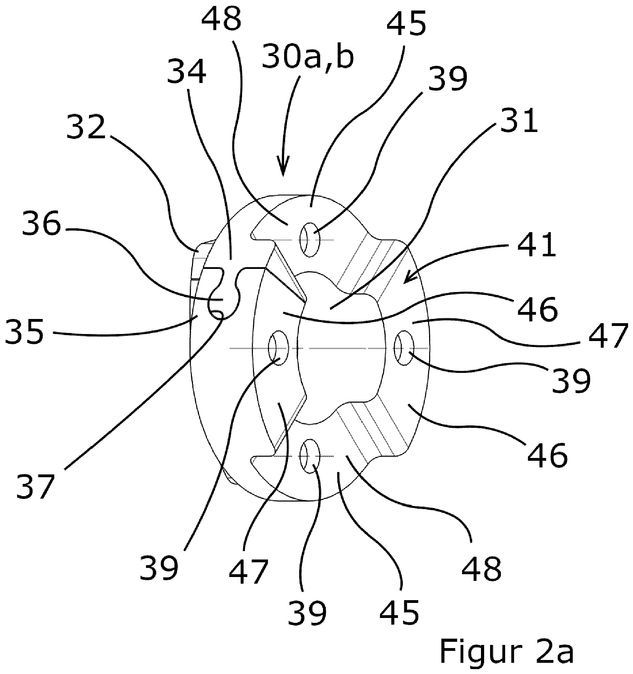

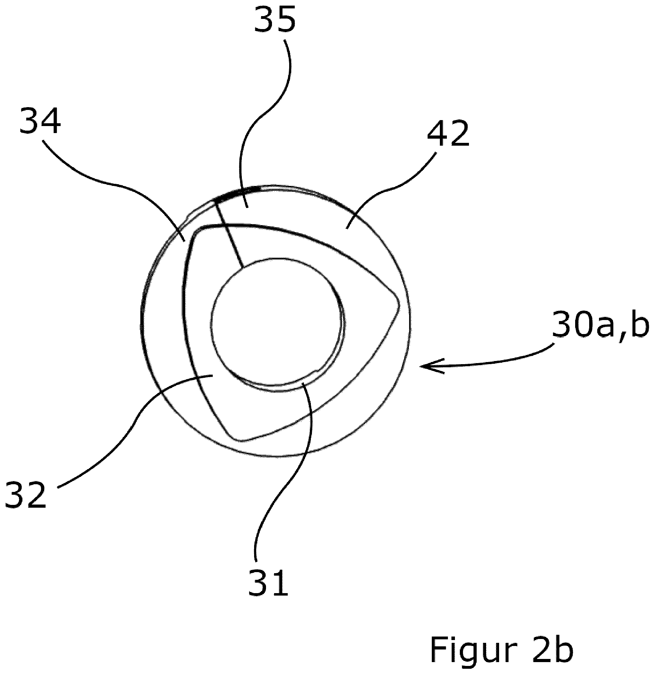

Die in den Figuren 2a, 2b dargestellten ersten Dichtringe 30a, 30b weisen jeweils zwei axiale Endflächen 41, 42 sowie eine axiale Durchgangsbohrung 31 auf. Auf der ersten Endfläche 41 sind zwei Vertiefungen 45 und zwei Erhöhungen 46 angeordnet (siehe Figur 2a). Die Vertiefungen 45 und Erhöhungen 46 wechseln sich in Umfangsrichtung ab und gehen ineinander über. Jede Vertiefung 45 und jede Erhöhung 46 bildet ein Plateau 47, 48 aus. Insgesamt sind also vier Plateaus 47, 48 vorhanden. Im Bereich eines jeden Plateaus ist eine axiale Sackbohrung 39 angeordnet. Die Sackbohrungen 39 erstrecken sich parallel zu der Durchgangsbohrung 31.

Die ersten Dichtringe 30a, 30b bestehen aus einem Elastomer und sind einteilig. Allerdings sind die ersten Dichtringe 30a, 30b jeweils in Umfangsrichtung unterbrochen und weisen zwei Enden 34, 35 auf. An jedem der Enden 34, 35 ist ein Verbindungsmittel 36, 37 vorgesehen. Die Verbindungsmittel 36, 37 bilden eine Puzzleverbindung und greifen bei bestimmungsgemäßem Gebrauch in Umfangsrichtung formschlüssig ineinander, wodurch sie den jeweiligen Dichtring 30a, 30b in Umfangsrichtung mittels Formschluss schließen.

Auf der zweiten Endfläche 42 (siehe Figur 2b) weisen die ersten Dichtringe 30a, 30b jeweils einen Vorsprung 32 auf. Der Vorsprung 32 ist zentral auf der zweiten Endfläche 42 angeordnet und weist im Querschnitt die Form eines Reuleaux-Dreiecks mit abgerundeten Ecken auf.

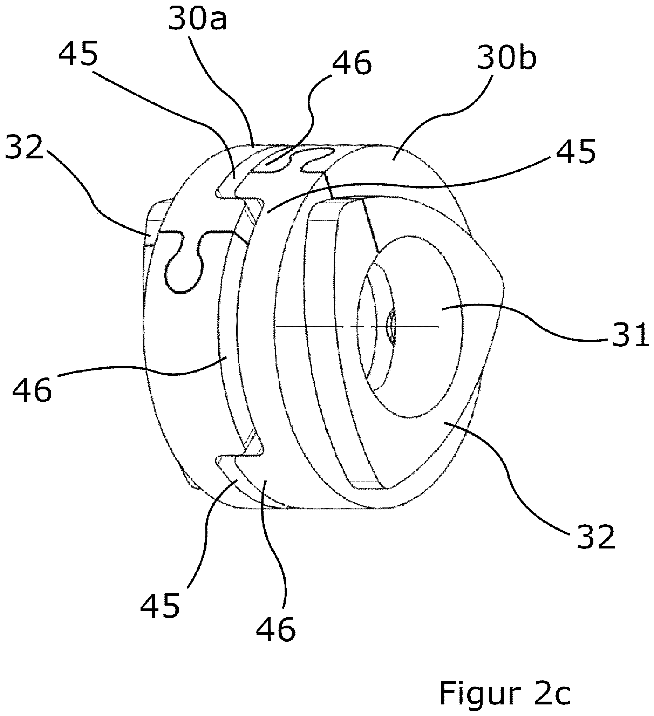

Die baugleichen Dichteinheiten 20a, 20b sind wie erwähnt gespiegelt und zueinander verdreht angeordnet. Auf diese Weise sind die axialen ersten Endflächen 41 der ersten Dichtringe 30a, 30b derart einander zugewandt dass die Erhöhungen 46 der ersten Dichtringe 30a, 30b jeweils in den Vertiefungen 45 des anderen ersten Dichtrings 30a, 30b liegen. Dadurch stehen die ersten Dichtringe 30a, 30b untereinander formschlüssig in Eingriff (siehe Figur 2c). In Folge stehen auch die Dichteinheiten 20a, 20b insgesamt in Umfangsrichtung formschlüssig miteinander in Eingriff (siehe Figur 1a).

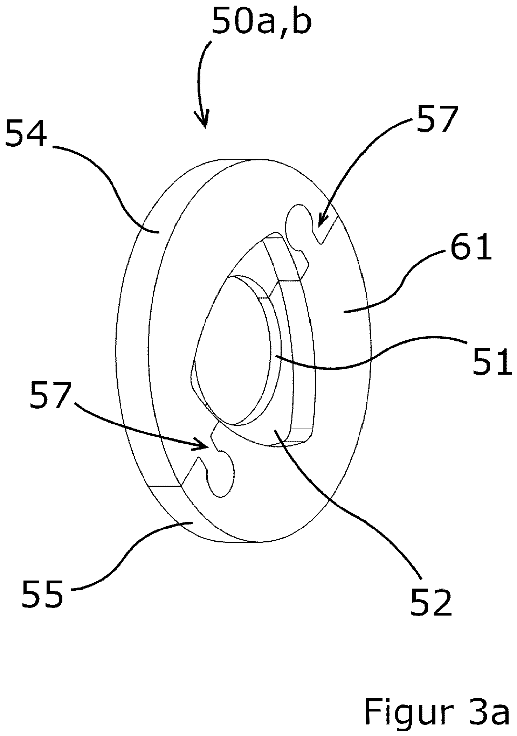

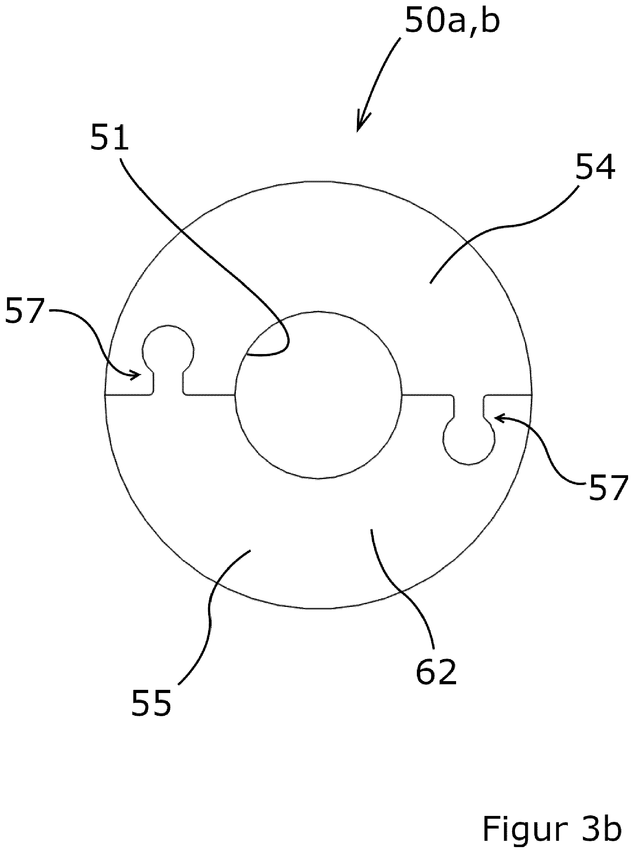

Die in den Figuren 3a, 3b dargestellten zweiten Dichtringe 50a, 50b bestehen aus PTFE-Compound. Bei anderen Ausführungsformen können die Dichtringe 50a, 50b aus anderen verschleißfesten Kunststoffen bestehen. Auf diese Weise sind die zweiten Dichtringe 50a, 50b reibungsärmer als die ersten Dichtringe 30a, 30b.

Die zweiten Dichtringe 50a, 50b weisen jeweils eine Durchgangsbohrung 51 auf, die mit der Durchgangsbohrung 31 des dazugehörigen ersten Dichtrings 30a, 30b die Durchgangsbohrung 22 für die Welle 102 bilden (siehe Figur 1a).

Die zweiten Dichtringe 50a, 50b sind jeweils in Umfangsrichtung in mindestens zwei miteinander verbindbare Segmente 54, 55 unterteilt (siehe Figur 3a). Die Segmente 54, 55 weisen jeweils komplementäre Verbindungsmittel zweier Puzzleverbindungen 57 auf und sind auf diese Weise miteinander verbindbar.

Die zweiten Dichtringe 50a, 50b weisen auf einer axialen ersten Endfläche 61 eine Vertiefung 52 auf. Die Vertiefung 52 ist zentral auf der Endfläche 61 angeordnet und weist im Querschnitt die Form eines Reuleaux-Dreiecks mit abgerundeten Ecken auf. Die Vertiefung 52 ist komplementär zu dem Vorsprung 32 des dazugehörigen ersten Dichtrings 30a, 30b. Bei bestimmungsgemäßem Gebrauch sitzt der Vorsprung 32 in der Vertiefung 52, wodurch die Dichtringe 30a, 50a der Dichteinheit 20a und die Dichtringe 30b, 50b der Dichteinheit 20b jeweils in Umfangsrichtung formschlüssig miteinander in Eingriff sind.

Die zweite axiale Endfläche 62 der zweiten Dichtringe 50a, 50b wirkt bei bestimmungsgemäßem Gebrauch als Gleitfläche gegenüber der statischen Fläche 112a, 112b.

Zwischen den Dichteinheiten 20a, 20b ist eine Mehrzahl von axialen Druckfederelementen 12 angeordnet (siehe Figur 1a). Die Druckfederelemente 12 sind in den Sackbohrungen 39 der ersten Dichtringe 30a, 30b angeordnet und bewirken, dass die Dichteinheiten 20a, 20b in axialer Richtung gegeneinander vorgespannt sind, also in entgegengesetzte axiale Richtungen auseinander gedrückt werden. Auf diese Weise werden die zweiten axialen Endflächen 62 der zweiten Dichtringe 50a, 50b bei bestimmungsgemäßem Gebrauch gegen die statischen Flächen 112a, 112b des Gehäuses 110 gedrückt und dichten dort einen Innenraum 111 des Gehäuses 110 gegenüber der Umgebung 120 ab. Auf diese Weise wird ein Eintritt von Gas aus der Umgebung 120 in den Innenraum 111 des Gehäuses 110 verhindert oder verringert. Die zweiten Dichtringe 50a, 50b werden auch bei auftretendem Verschleiß weiterhin gegen die statischen Flächen 112a, 112b gedrückt, sodass auch langfristig die Dichtwirkung sichergestellt ist.

Das Gehäuse 110 umfasst zwei Gaszuführöffnungen 114, jeweils in Form einer Durchgangsbohrung (siehe Figur 1b). Durch die Gaszuführöffnungen 114 kann bei bestimmungsgemäßem Gebrauch ein Spül- oder Sperrgas, beispielsweise Stickstoff, eingebracht werden. Der Druck des Sperrgases ist höher als der Druck in der Umgebung 120. Das Sperrgas verstärkt die Vorspannung zwischen den Dichteinheiten 20a, 20b. Gleichzeitig führt der höhere Druck dazu, dass im Falle einer undichten Stelle im Bereich der Abdichtung Sperrgas in die Umgebung 120 austritt. Auf diese Weise wird zusätzlich ein Eintritt von Gas aus der Umgebung 120 in den Innenraum 111 des Gehäuses 110 verhindert oder verringert.

Insgesamt wird die Dichtung 10 also durch die ersten Dichtringe 30a, 30b aufgrund ihrer hohen Reibung sicher auf der Welle 102 gehalten. Die formschlüssige Verbindung der ersten Dichtringe 30a, 30b untereinander führt dazu, dass die Sackbohrungen 39 miteinander fluchten. Die Druckfederelemente 12 bewirken eine axiale Vorspannung zwischen den Dichteinheiten 20a, 20b. Durch das Sperrgas wird die Vorspannung verstärkt. Die zweiten Dichtringe 50a, 50b werden aufgrund ihrer formschlüssigen Verbindung von den ersten Dichtringen 30a, 30b mitbewegt und dichten an den statischen Flächen 112a, 112b ab. Da die Reibung zwischen Welle 102 und ersten Dichtringen 30a, 30b größer ist als die Reibung zwischen den zweiten Dichtringen 50a, 50b und den statischen Flächen 112a, 112b ist sichergestellt, dass die Dichtung 10 mit der Welle 102 rotiert.

### Bezugszeichenliste

- 10: Dichtung
- 12: Druckfederelement

- 20a: Dichteinheit
- 20b: Dichteinheit
- 22: Durchgangsbohrung

- 30a: erster Dichtring
- 30b: erster Dichtring
- 31: Durchgangsbohrung
- 32: Vorsprung
- 34: Ende
- 35: Ende
- 36: Verbindungsmittel
- 37: Verbindungsmittel
- 39: Sackbohrung
- 41: erste Endfläche
- 42: zweite Endfläche
- 45: Vertiefung
- 46: Erhöhung
- 47: Plateau
- 48: Plateau

- 50a: zweiter Dichtring
- 50b: zweiter Dichtring
- 51: Durchgangsbohrung
- 52: Vertiefung
- 54: Segment

- 55: Segment
- 57: Puzzleverbindung
- 61: erste Endfläche
- 62: zweite Endfläche

- 100: rotierendes System
- 102: Welle

- 110: Gehäuse
- 111: Innenraum
- 112a: Fläche
- 112b: Fläche
- 114: Gaszuführöffnung

- 120: Umgebung

- H: Hauptachse

## Patentansprüche

1. Dichtung (10) für ein rotierendes System (100) mit zwei Dichteinheiten (20a, 20b), die entlang einer Hauptachse H hintereinander angeordnet sind, wobei die Dichteinheiten (20a, 20b) jeweils eine Durchgangsbohrung (22) für eine Welle (102) aufweisen und in Umfangsrichtung formschlüssig miteinander in Eingriff stehen und wobei zwischen den Dichteinheiten (20a, 20b) mindestens ein axiales Druckfederelement (12) angeordnet ist.

2. Dichtung (10) nach Anspruch 1,
**dadurch gekennzeichnet, dass** zumindest eine der Dichteinheiten (20a, 20b) einen ersten Dichtring (30a, 30b) und einen zweiten Dichtring (50a, 50b) aufweist, wobei die Dichtringe (30a, 30b, 50a, 50b) einer Dichteinheit (20a, 20b) axial benachbart angeordnet sind.

3. Dichtung (10) nach Anspruch 2,
**dadurch gekennzeichnet, dass** der erste Dichtring (30a, 30b) reibungsreich und der zweite Dichtring (50a, 50b) reibungsarm ist.

4. Dichtung (10) nach einem der Ansprüche 2 oder 3,
**dadurch gekennzeichnet, dass** die Dichtringe (30a, 30b, 50a, 50b) einer Dichteinheit (20a, 20b) in Umfangsrichtung formschlüssig miteinander in Eingriff stehen.

5. Dichtung (10) nach einem der Ansprüche 2 bis 4,
**dadurch gekennzeichnet, dass** der zweite Dichtring (50a, 50b) in axialer Richtung eine Vertiefung (52) und der erste Dichtring (30a, 30b) in axialer Richtung einen zu der Vertiefung (52) komplementären Vorsprung (32) aufweist, wobei die Vertiefung (52) und der Vorsprung (32) die Dichtringe (30a, 30b, 50a, 50b) formschlüssig miteinander verbinden.

6. Dichtung (10) nach einem der vorhergehenden Ansprüche,
**dadurch gekennzeichnet, dass** die Dichteinheiten (20a, 20b) baugleich, aber gespiegelt angeordnet sind.

7. Dichtung (10) nach einem der Ansprüche 2 bis 6,
**dadurch gekennzeichnet, dass** der erste Dichtring (30a, 30b) auf einer axialen Endfläche (41) mindestens eine Vertiefung (45) und eine in Umfangsrichtung dahinterliegende Erhöhung (46) aufweist.

8. Dichtung (10) nach einem der Ansprüche 2 bis 7,
**dadurch gekennzeichnet, dass** der erste Dichtring (30a, 30b) mindestens eine axiale Sackbohrung (39) aufweist, wobei das axiale Druckfederelement (12) in der axialen Sackbohrung (39) angeordnet ist.

9. Dichtung (10) nach einem der Ansprüche 2 bis 8,
**dadurch gekennzeichnet, dass** der erste Dichtring (30a, 30b) einteilig ist, wobei der erste Dichtring (30a, 30b) in Umfangsrichtung unterbrochen ist und zwei Enden (34, 35) aufweist, wobei an den Enden (34, 35) jeweils ein Verbindungsmittel (36, 37) zum gemeinsamen Schließen des Dichtrings (30a, 30b) in Umfangsrichtung vorgesehen ist.

10. Dichtung (10) nach Anspruch 9,
**dadurch gekennzeichnet, dass** die Verbindungsmittel (36, 37) in Umfangsrichtung formschlüssig ineinander greifen.

11. Dichtung (10) nach einem der Ansprüche 2 bis 10,
**dadurch gekennzeichnet, dass** der zweite Dichtring (50a, 50b) in Umfangsrichtung in mindestens zwei miteinander verbindbare Segmente (54, 55) unterteilt ist.

12. Dichtung (10) nach Anspruch 11,
**dadurch gekennzeichnet, dass** benachbarte Segmente (54, 55) formschlüssig miteinander verbindbar sind.

13. Rotierendes System (100) mit einer um eine Hauptachse H rotierenden Welle (102), mindestens einer zu der Welle statischen Fläche (112) und einer auf der Welle (102) angeordneten und in Kontakt zu der Fläche (112a, 112b) stehenden Dichtung (10) nach einem der vorhergehenden Ansprüche.

14. Rotierendes System (100) nach Anspruch 13,
**dadurch gekennzeichnet, dass** die Dichtung (10) in einem Gehäuse (110) angeordnet ist, wobei das Gehäuse (110) zwei statische Flächen (112a, 112b) aufweist, mit denen die Dichtung (10) in Kontakt steht.

15. Rotierendes System (100) nach Anspruch 13 oder 14,
**dadurch gekennzeichnet, dass** das Gehäuse (110) eine Gaszuführöffnung (114) aufweist.
